# EUROPÄISCHE PATENTSCHRIFT

(11) **EP 3 118 487 B1**
(45) Veröffentlichungstag und Bekanntmachung des Hinweises auf die Patenterteilung: **16.05.2018**
(21) Anmeldenummer: 16178847.6
(22) Anmeldetag: 11.07.2016
(51) Int. Cl.: F16H 47/02, F16H 7/18, F16H 49/00

(54) **VORRICHTUNG ZUM ÜBERTRAGEN EINER DREHBEWEGUNG**
DEVICE FOR TRANSMITTING ROTATIONAL MOVEMENT
DISPOSITIF DE TRANSFERT D'UN MOUVEMENT ROTATIF

(30) Priorität: 14.07.2015 CH 10252015
(43) Veröffentlichungstag der Anmeldung: 18.01.2017
(73) Patentinhaber: WRH Walter Reist Holding AG, 8272 Ermatingen (CH)
(72) Erfinder: Reist, Walter, 8340 Hinwil (CH)
(74) Vertreter: Frei Patent Attorneys

(56) Entgegenhaltungen:
- EP-A1- 2 466 168
- DE-A1- 3 428 963
- DE-A1- 4 006 389
- US-A- 3 095 757
- US-A- 3 808 813

## Beschreibung

Die Erfindung bezieht sich auf das Gebiet der Antriebstechnik, und betrifft eine Vorrichtung zum Übertragen einer Drehbewegung gemäss dem Oberbegriff des Patentanspruches 1.

Eine derartige Antriebsvorrichtung ist beispielsweise aus DE 3 428 963 A1 bekannt Diese in **Figur 1** wiedergegebene Vorrichtung dient zur Übertragung einer Drehbewegung von einem Antrieb A zu einem Abtrieb B, jeweils in einem Umlenkgehäuse la, 1b, mittels geschlossenen, flexiblen Kettenführungen 7a, 7b, wobei die Kraftübertragung mittels einer stoss- und zugfähigen Endloskette 6 durchgeführt wird. Die flexible Kettenführung 7a, 7b besteht bspw. aus einem in alle Raumrichtungen biegbaren Schlauch, dessen Innenraum als Kettenkanal benutzt wird. Die Antriebsvorrichtung hat unter anderem die Vorteile, dass Antrieb und Antrieb in fast beliebigen Lagen montiert sein können, dass komplexe Getriebe ersetzt werden können, dass eine Über- und Untersetzung realisiert werden kann, und dass beide Kettenstränge Kraft übertragen: der eine überträgt Zug- und der andere Druckkräfte, was zu einer kraftausgleichenden Wirkung führt. Auch können mehrere Antriebe und/oder mehrere Abtriebe an der gleichen Kette vorliegen, und somit in einfacher Weise Antriebskräfte von mehreren Antrieben aufsummiert oder auf mehrere Abtriebe verteilt werden.

Es erweist sich aber, dass die Antriebsvorrichtung bezüglich der zulässigen Umlenkradien der Kettenführungen beschränkt ist: kleine Umlenkradien und komplizierte Verläufe der Kettenführung vergrössern die Reibung der Endloskette an der Kettenführung. Zudem zeigt sich im Gebrauch, dass die zur Verkleinerung der Reibung notwendige Schmierung durch Verschleppung des Schmiermittels in Laufrichtung sich verhältnismässig schnell verbraucht und stets nachgeführt werden muss. Die daraufhin nötige Reinigung von Anhäufungen des Schmiermittels in den Kettenläufen und insbesondere an Übergangsstellen kann nur bei zwangsläufigem Stillstehen der Anlage, die eigentlich auf Dauerbetrieb ausgelegt ist, durchgeführt werden. Das dazu erforderliche Herunterfahren der Anlage wegen ist betrieblich äusserst unerwünscht.

Es ist deshalb Aufgabe der Erfindung, eine Vorrichtung zum Übertragen einer Drehbewegung der eingangs genannten Art zu schaffen, welche die oben genannten Nachteile behebt, wobei aber Vorteile der bekannten Vorrichtung soweit möglich beibehalten werden sollen.

Diese Aufgabe löst eine Vorrichtung zum Übertragen einer Drehbewegung mit den Merkmalen des Patentanspruches 1.

Die Vorrichtung weist also auf:
- einen ersten Kraftübertragungsabschnitt mit einem ersten Antrieb und mindestens einem ersten Abtrieb und einer zwischen diesen angeordneten ersten Kettenführung zur Aufnahme einer Druck- und Zugkräfte übertragenden ersten Endloskette, wobei die erste Endloskette zwischen dem ersten Antrieb und dem ersten Abtrieb umläuft und Druck- respektive Zugkräfte zwischen dem ersten Antrieb und dem ersten Abtrieb überträgt;
- einen zweiten Kraftübertragungsabschnitt mit einem zweiten Antrieb und mindestens einem zweiten Abtrieb, und einer zwischen diesen angeordneten zweiten Kettenführung zur Aufnahme einer Druck- und Zugkräfte übertragenden zweiten Endloskette, wobei die zweite Endloskette zwischen dem zweiten Antrieb und dem zweiten Abtrieb umläuft und Druck- respektive Zugkräfte zwischen dem zweiten Antrieb und dem zweiten Abtrieb überträgt;
- wobei zur Übertragung von Kräften zwischen dem ersten und dem zweiten Kraftübertragungsabschnitt ein mittlerer Kraftübertragungsabschnitt vorliegt, mit einem mittleren Antrieb und einem mittleren Abtrieb, und einer zwischen diesen angeordneten Leitung zur Aufnahme eines hydraulischen Fluids, wobei das hydraulische Fluid zwischen dem mittleren Antrieb und dem mittleren Abtrieb umläuft und Druckkräfte zwischen dem mittleren Antrieb und dem mittleren Abtrieb überträgt.
- Dabei ist der erste Abtrieb mit dem mittleren Antrieb und der mittlere Abtrieb mit dem zweiten Antrieb gekoppelt.

Es ist also ein Antriebssystem, welches grundsätzlich auf der Kraftübertragung mittels einer Kette basiert, dahingehend modifiziert, dass ein Abschnitt zwischengeschaltet ist, welcher auf der Kraftübertragung mittels hydraulischen Fluids basiert.

Damit wird es möglich, mittels des mittleren Kraftübertragungsabschnitts räumliche oder konstruktive Hindernisse zu überwinden, welche den Einsatz der nicht modifizierten Antriebsvorrichtung verunmöglichen würden. Die Vorteile der kettenbasierten Antriebsvorrichtung blieben für die nicht modifizierten Abschnitte, also für den ersten und den zweiten Kraftübertragungsabschnitt erhalten. Dies betrifft beispielsweise die Aufteilung der Antriebskraft auf Zug- und Stosskraft, die Möglichkeit, mehrere Antriebe oder Abtriebe einzusetzen.

Ferner können die Abschnitte, in denen Ketten zur Kraftübertragung vorliegen, in gefährdeten Umgebungen eingesetzt werden, beispielsweise Umgebungen hoher Temperatur, wo die Verwendung hydraulischer Fluide nicht möglich wäre, wo also ein rein hydraulisches System nicht eingesetzt werden könnte.

In einer Ausführungsform weisen die erste Kettenführung und die zweite Kettenführung in Bereichen ausserhalb des jeweiligen Antriebs und des jeweiligen Abtriebs Umlenkbereiche auf, wobei die Umlenkbereiche jeweils einen Krümmungsradius aufweisen, und die Krümmungsradien der Umlenkbereiche der beiden Kettenführungen jeweils ein erstes Mass nicht unterschreiten.

Der erste und der zweite Kraftübertragungsabschnitt weisen also eher wenig gekrümmte Abschnitte auf. Krümmungsradien der Kettenführungen sind beispielsweise grösser als 10 cm oder grösser als 20 cm oder grösser als 30 cm.

Es versteht sich, dass in Bereichen, in welchen ein Krümmungsradius kontinuierlich variiert, beispielsweise indem er ausgehend von einem geraden Abschnitt stetig kleiner wird und dann wieder zunimmt, der kleinste Krümmungsradius als (massgeblicher) Krümmungsradius für diesen Bereich betrachtet wird.

In einer Ausführungsform weist die Leitung des mittleren Kraftübertragungsabschnitts in Bereichen ausserhalb des mittleren Antriebs und des mittleren Abtriebs Leitungs-Umlenkbereiche auf, wobei die Leitungs-Umlenkbereiche jeweils einen Krümmungsradius aufweisen, und die Krümmungsradien der Leitungs-Umlenkbereiche jeweils ein zweites Mass unterschreiten.

Der mittlere Kraftübertragungsabschnitt weist also eher stärker gekrümmte Abschnitte auf. Krümmungsradien der Leitungen sind beispielsweise kleiner als 30 cm oder kleiner als 20 cm oder kleiner als 10 cm.

In einer Ausführungsform werden die Leitungen durch Rohre gebildet, die gebogen sein können und dann einen definierten Krümmungsradius aufweisen. Es ist aber auch möglich, die Leitungen durch Hohlräume in frei geformten Körpern zu bilden, also beispielsweise durch Giessen, Spritzen oder Fräsen hergestellt. In solchen Fällen kann der Verlauf einer Mittellinie durch einen solchen Hohlraum zur Definition des Leitungsverlaufs und damit der Krümmung verwendet werden.

In einer Ausführungsform ist das zweite Mass kleiner als das erste Mass. Der grösste Krümmungsradius der Leitungen des mittleren Kraftübertragungsabschnitts ist also kleiner als der kleinste Krümmungsradius der Kettenführungen des ersten und zweiten Kraftübertragungsabschnitts. Damit kann der mittlere Kraftübertragungsabschnitt in Bereichen liegen, in denen wegen der notwendigen kleinen Krümmungsradien der Einsatz einer kettenbasierten Kraftübertragung nicht möglich wäre.

In einer Ausführungsform beträgt das zweite Mass weniger als die Hälfte oder weniger als ein Viertel des ersten Masses.

In einer Ausführungsform ist der mittlere Kraftübertragungsabschnitt zum Überwinden einer Wand oder einer Decke eines Gebäudes angeordnet, oder allgemein in einem Bereich, in welchem wenig Raum vorhanden ist - beispielsweise ein kleiner Raum, ein Eckbereich eines Raumes etc. Hier können starke Krümmungen notwendig sein und mittels der hydraulischen Kraftübertragung überwunden werden.

In einer Ausführungsform ist in einer umgekehrten Betriebsart mindestens einer der Antriebe als Abtrieb und/oder mindestens einer der Abtriebe als Antrieb betreibbar. Allgemein gesprochen kann jeder Antrieb oder Abtrieb als ein Wandler bezeichnet werden, der je nach Richtung der Kraftübertragung als Antrieb oder Abtrieb wirkt.

Es kann insbesondere in einer Variante einer umgekehrten Betriebsart die ganze Vorrichtung in umgekehrter Richtung betrieben werden, also indem eine Antriebskraft über den zweiten, dann den mittleren, und dann der ersten Kraftübertragungsabschnitt übertragen wird. Eine umgekehrte Betriebsart kann alternierend mit einer nicht umgekehrten Betriebsart vorliegen. Dabei wechseln also die Wandler (Antriebe und Abtriebe) über die Zeit alternierend ihre Funktion.

In einer Ausführungsform ist der mittlere Antrieb und/oder der mittlere Abtrieb durch eine Flügelzellenpumpe realisiert.

In einer Ausführungsform weist mindestens eine der Flügelzellenpumpen einen Kraftübertragungsbereich auf, in welchem Antriebs- resp. Abtriebselemente zur Kraftübertragung zum resp. vom hydraulischen Fluid eintauchen und eine geschlossene Zelle bilden, und dieser Kraftübertragungsbereich in Umfangsrichtung einen Bereich von mindestens 150 Grad und insbesondere von mindestens 180 Grad einnimmt.

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Antriebsvorrichtung gemäss dem Stand der Technik;
- Figur 2: eine vereinfachte Darstellung derselben ;
- Figur 3-4: Antriebsvorrichtungen gemäss Ausführungsbeispielen der Erfindung, mit unterschiedlich ausgestalteten Kraftübertragungsabschnitten;
- Figur 5: einen hydraulischen Antrieb respektive Abtrieb.

Grundsätzlich sind in den Figuren gleiche oder gleich wirkende Teile mit gleichen Bezugszeichen versehen.

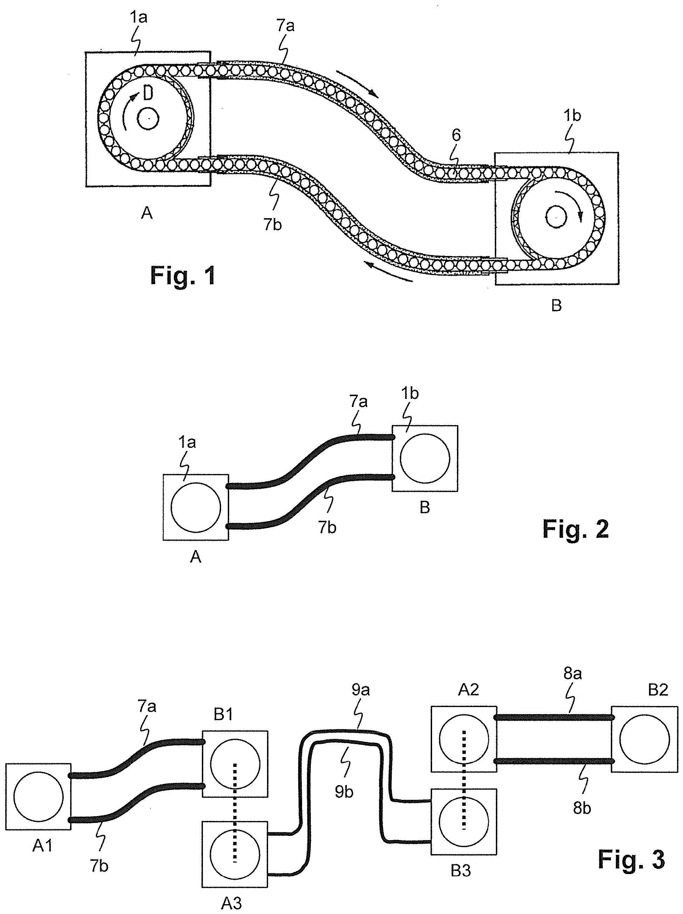

**Figur 2** zeigt eine vereinfachte Darstellung der Antriebsvorrichtung gemäss dem Stand der Technik aus der Figur 1. Die darin vereinfacht dargestellten Elemente wie Kettenführungen 7a, 7b und Umlenkgehäuse 1a, 1b zur Realisierung eines Antriebs A respektive eines Abtriebs B (oder umgekehrt) werden in den nachfolgenden Figuren ebenfalls benutzt.

**Figur 3** zeigt eine Antriebsvorrichtung mit unterschiedlich ausgestalteten Kraftübertragungsabschnitten:
Ein erster Kraftübertragungsabschnitt weist einen ersten Antrieb A1 und einen ersten Abtrieb B1 und eine zwischen diesen angeordnete erste Kettenführung 7a, 7b mit einer umlaufenden Druck- und Zugkräfte übertragenden ersten Endloskette, welche Druck- respektive Zugkräfte zwischen dem ersten Antrieb A1 und dem ersten Abtrieb B1 überträgt.

Ein zweiter Kraftübertragungsabschnitt weist einen zweiten Antrieb A2 und einen zweiten Abtrieb B2 und eine zwischen diesen angeordnete zweite Kettenführung 8a, 8b mit einer umlaufenden Druck- und Zugkräfte übertragenden zweiten Endloskette, welche Druck- respektive Zugkräfte zwischen dem zweiten Antrieb A2 und dem zweiten Abtrieb B2 überträgt.

Ein mittlerer Kraftübertragungsabschnitt weist einen mittleren Antrieb A3 und einem mittleren Abtrieb B3 auf, und eine zwischen diesen angeordnete Leitung 9a, 9b zur Aufnahme eines hydraulischen Fluids, wobei das hydraulische Fluid zwischen dem mittleren Antrieb A3 und dem mittleren Abtrieb B3 umläuft und Druckkräfte zwischen dem mittleren Antrieb A3 und dem mittleren Abtrieb B3 überträgt.

Es ist der erste Abtrieb B2 mit dem mittleren Antrieb A3 und der mittlere Abtrieb B3 mit dem zweiten Antrieb A2 gekoppelt, d.h. dass die aneinander gekoppelten Abtriebe respektive Antriebe Kräfte und Bewegungen in beide Richtungen aneinander übertragen.

Der mittlere Kraftübertragungsabschnitt mit den Leitungen 9a, 9b kann im Wesentlichen beliebig kleine Krümmungsradien und einen kompliziert geformten Verlauf aufweisen, der mit einer kettenbasierten Kraftübertragung nicht realisiert werden könnte.

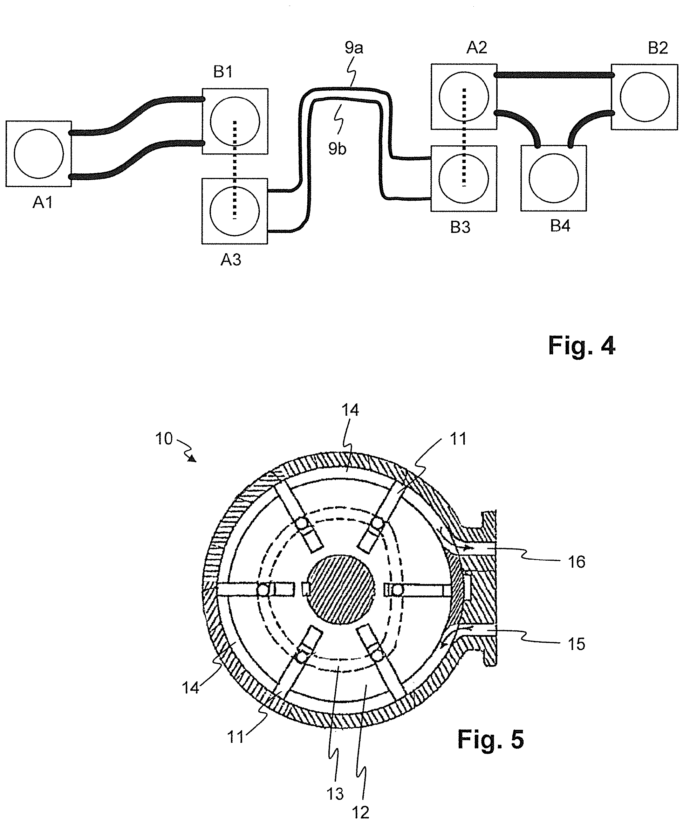

**Figur 4** zeigt eine andere Antriebsvorrichtung mit unterschiedlich ausgestalteten Kraftübertragungsabschnitten. Hier ist im zweiten Kraftübertragungsabschnitt nebst dem zweiten Abtrieb B2 ein weiterer Abtrieb B4 angeordnet, der ebenfalls durch den zweiten Antrieb angetrieben ist. In weitern Ausführungsformen liegen in analoger Weise im ersten und/oder zweiten Kraftübertragungsabschnitt weitere Antriebe und/oder Abtriebe vor.

**Figur 5** zeigt einen hydraulischen Antrieb respektive Abtrieb 10, wie er im mittleren Kraftübertragungsabschnitt der vorgenannten Ausführungsformen eingesetzt werden kann. Schieber 11 sind in radialer Richtung verschiebbar in einer rotierenden Scheibe oder Trommel 12 gelagert. Die Scheibe oder Trommel 12 ist mit einer Antriebsrespektive Abtriebswelle verbunden. Die radiale Verschiebung der Schieber 11 wird mittels einer Steuerkurve 13 gesteuert. Die Schieber 11 ragen in einem ausgefahrenen Zustand in einen Förderkanal und bilden Förderabschnitte 14, die gegeneinander abgedichtet sind und mittels welchen ein hydraulisches Fluid von einem ersten Anschluss 15 zu einem zweiten Anschluss 16 förderbar ist. Die Vorrichtung wirkt also als Antrieb zum Umsetzen einer Bewegung der Antriebswelle. Umgekehrt kann ein mit Druck beaufschlagtes Fluid an einem der Anschlüsse vorliegen und die Schieber 11 und damit die Scheibe oder Trommel 12 und die angeschlossene Welle in Rotation versetzen. Die Vorrichtung wirkt also als Abtrieb zum Antreiben der Abtriebswelle.

Ein Umfangsbereich, in welchem die Förderabschnitte 14 vorliegen, beträgt beispielsweise - je nach Drehwinkel der Scheibe oder Trommel 12 - maximal ca. 4 · 60 = 240 Grad und minimal ca. 3 · 60 = 180 Grad.

## Patentansprüche

1. Vorrichtung zum Übertragen einer Drehbewegung, aufweisend
einen **ersten Kraftübertragungsabschnitt** mit einem ersten Antrieb (A1) und mindestens einem ersten Abtrieb (B1) und einer zwischen diesen angeordneten ersten Kettenführung (7a, 7b) zur Aufnahme einer Druck- und Zugkräfte übertragenden ersten Endloskette, wobei die erste Endloskette zwischen dem ersten Antrieb (A1) und dem ersten Abtrieb (B1) umläuft und Druck- respektive Zugkräfte zwischen dem ersten Antrieb (A1) und dem ersten Abtrieb (B1) überträgt;
einen **zweiten Kraftübertragungsabschnitt** mit einem zweiten Antrieb (A2) und mindestens einem zweiten Abtrieb (B2), und einer zwischen diesen angeordneten zweiten Kettenführung (8a, 8b) zur Aufnahme einer Druck- und Zugkräfte übertragenden zweiten Endloskette, wobei die zweite Endloskette zwischen dem zweiten Antrieb (A2) und dem mindestens einen zweiten Abtrieb (B2) umläuft und Druck- respektive Zugkräfte zwischen dem zweiten Antrieb (A2) und dem zweiten Abtrieb (B2) überträgt;
wobei zur Übertragung von Kräften zwischen dem ersten und dem zweiten Kraftübertragungsabschnitt ein **mittlerer Kraftübertragungsabschnitt** vorliegt, mit einem mittleren Antrieb (A3) und einem mittleren Abtrieb (B3), und einer zwischen diesen angeordneten Leitung (9a, 9b) zur Aufnahme eines hydraulischen Fluids, wobei das hydraulische Fluid zwischen dem mittleren Antrieb (A3) und dem mittleren Abtrieb (B3) umläuft und Druckkräfte zwischen dem mittleren Antrieb (A3) und dem mittleren Abtrieb (B3) überträgt;
und wobei der erste Abtrieb (B1) mit dem mittleren Antrieb (A3) und der mittlere Abtrieb (B3) mit dem zweiten Antrieb (A2) gekoppelt ist.

2. Vorrichtung gemäss Anspruch 1, wobei die erste Kettenführung (7a, 7b) und die zweite Kettenführung (8a, 8b) in Bereichen ausserhalb des jeweiligen Antriebs und des jeweiligen Abtriebs Umlenkbereiche aufweisen, wobei die Umlenkbereiche jeweils einen Krümmungsradius aufweisen, und die Krümmungsradien der Umlenkbereiche der beiden Kettenführungen (7a, 7b); (8a, 8b) jeweils ein erstes Mass nicht unterschreiten.

3. Vorrichtung gemäss einem der vorangehenden Ansprüche, wobei die Leitungen (9a, 9b) des mittleren Kraftübertragungsabschnitts in Bereichen ausserhalb des mittleren Antriebs (A3) und des mittleren Abtriebs (B3) Leitungs-Umlenkbereiche aufweisen, wobei die Leitungs-Umlenkbereiche jeweils einen Krümmungsradius aufweisen, und die Krümmungsradien der Leitungs-Umlenkbereiche jeweils ein zweites Mass unterschreiten.

4. Vorrichtung gemäss Anspruch 2 und Anspruch 3, wobei das zweite Mass kleiner ist als das erste Mass.

5. Vorrichtung gemäss Anspruch 4, wobei das zweite Mass weniger als die Hälfte oder weniger als ein Viertel des ersten Masses beträgt.

6. Vorrichtung gemäss einem der Ansprüche 2 bis 5, wobei die Krümmungsradien der Umlenkbereiche der beiden Kettenführungen (7a, 7b; 8a, 8b) grösser sind als 10 cm, insbesondere grösser als 20 cm, und insbesondere grösser als 30 cm.

7. Vorrichtung gemäss einem der Ansprüche 3 bis 6, wobei die Krümmungsradien der Leitungs-Umlenkbereiche kleiner sind als 30 cm, insbesondere kleiner sind als 20 cm und insbesondere kleiner sind als 10 cm.

8. Vorrichtung gemäss einem der vorangehenden Ansprüche, wobei der mittlere Kraftübertragungsabschnitt zum Überwinden einer Wand oder einer Decke eines Gebäudes angeordnet ist.

9. Vorrichtung gemäss einem der vorangehenden Ansprüche, wobei in einer umgekehrten Betriebsart mindestens einer der Antriebe (A1, A2, A3) als Abtrieb und/oder mindestens einer der Abtriebe (B1, B2, B3, B4) als Antrieb betreibbar ist.

10. Vorrichtung gemäss einem der vorangehenden Ansprüche wobei der mittlere Antrieb und/oder der mittlere Abtrieb durch eine Flügelzellenpumpe realisiert sind.

11. Vorrichtung gemäss Anspruch 10, wobei mindestens eine der Flügelzellenpumpen einen Kraftübertragungsbereich aufweist, in welchem Antriebs- resp. Abtriebselemente zur Kraftübertragung zum resp. vom hydraulischen Fluid in dieses Fluid eintauchen und eine geschlossene Zelle bilden, und dieser Kraftübertragungsbereich in Umfangsrichtung einen Bereich von mindestens 150 Grad und insbesondere von mindestens 180 Grad einnimmt.

## Claims

1. A device for transmitting a rotation movement, comprising
• a **first force transmission section** with a first drive input (A1) and at least one first drive output (B1), and with a first chain guide (7a, 7b) which is arranged between these and is for accommodating a first continuous chain transmitting push forces and pull forces, wherein the first continuous chain circulates between the first drive input (A1) and the first drive output (B1) and transmits at least one of push or pull forces between the first drive input (A1) and the first drive output (B1);
• a **second force transmission section** with a second drive input (A2) and with at least one second drive output (B2), and with a second chain guide (8a, 8b) which is arranged between these and is for accommodating a second continuous chain transmitting push and pull forces, wherein the second continuous chain circulates between the second drive input (A2) and the at least one second drive output (B2) and transmits at least one of push or pull forces between the second drive input (A2) and the second drive output (B2);
• wherein, for the transmission of forces between the first and the second force transmission section, a **middle force transmission section** is present, with a middle drive input (A3) and a middle drive output (B3), and with a conduit (9a, 9b) which is arranged between these, for accommodating a hydraulic fluid, wherein the hydraulic fluid circulates between the middle drive input (A3) and the middle drive output (B3) and transmits push forces between the middle drive input (3) and the middle drive output (B3);
• and wherein the first drive output (B 1) is coupled to the middle drive input (A3), and the middle drive output (B3) is coupled to the second drive input (A2).

2. A device according claim 1, wherein the first chain guide (7a, 7b) and the second chain guide (8a, 8b), in regions outside the respective drive input and the respective drive output, comprise deflection regions, wherein the deflection regions in each case have a radius of curvature, and the radii of curvature of the deflection regions of both chain guides (7a, 7b); (8a, 8b) in each case do not fall short of a first dimension.

3. A device according to one of the preceding claims, wherein the conduits (9a, 9b) of the middle force transmission section, in regions outside the middle drive input (A3) and the middle drive output (B3), comprise conduit deflection regions, wherein the conduit deflection regions each have a radius of curvature, and the radii of curvature of the conduit deflection regions each fall short of a second dimension.

4. A device according to claim 2 and claim 3, wherein the second dimension is smaller than the first dimension.

5. A device according to claim 4, wherein the second dimension is less than half or less than a quarter of the first dimension.

6. A device according to one of the claims 2 to 5, wherein the radii of curvature of the deflection regions of the two chain guides (7a, 7b; 8a, 8b) are larger than 10 cm, in particular larger than 20 cm, and in particular larger than 30 cm.

7. A device according to one of the claims 3 to 6, wherein the radii of curvature of the conduit deflection regions are smaller than 30 cm, in particular smaller than 20 cm and in particular smaller than 10 cm.

8. A device according to one of the preceding claims, wherein the middle force transmission section is arranged for overcoming a wall or a ceiling of a building.

9. A device according to one of the preceding claims, wherein in a reverse operational manner, at least one of the drive inputs (A1, A2, A3) can be operated as a drive output and/or at least one of the drive outputs (B1, B2, B3, B4) can be operated as a drive input.

10. A device according to one of the preceding claims, wherein the middle drive input and/or the middle drive output is realised by a vane cell pump.

11. A device according to claim 10, wherein at least one of the vane cell pumps comprise a force transmission region, in which drive elements and driven elements for the force transmission to and from the hydraulic fluid respectively, immerse into this fluid and form a closed cell, and this force transmission region in the circumferential direction occupies a region of at least 150 degrees and in particular of at least 180 degrees.

## Revendications

1. Ensemble de transmission d'un déplacement de rotation, l'ensemble présentant
une première section de transmission de force présentant un premier ensemble d'entraînement (A1) et au moins un premier ensemble entraîné (B1) ainsi qu'un premier guide-chaîne (7a, 7b) disposé entre eux et reprenant une première chaîne sans fin qui transmet des forces de poussée et de traction,
la première chaîne sans fin circulant entre le premier ensemble d'entraînement (A1) et le premier ensemble entraîné (B1) et transmettant des forces de poussée ou des forces de traction entre le premier ensemble d'entraînement (A1) et le premier ensemble entraîné (B1),
une deuxième section de transmission de force présentant un deuxième ensemble d'entraînement (A2) et au moins un deuxième ensemble entraîné (B2) ainsi qu'un deuxième guide-chaîne (8a, 8b) disposé entre eux et reprenant une deuxième chaîne sans fin qui transmet des forces de poussée et des forces de traction, la deuxième chaîne sans fin circulant entre le deuxième ensemble d'entraînement (A2) et le ou les deuxièmes ensembles entraînés (B2) et transmettant des forces de poussée ou des forces de traction entre le deuxième ensemble d'entraînement (A2) et le deuxième ensemble entraîné (B2),
une section médiane de transmission de force présentant un ensemble médian d'entraînement (A3) et un ensemble entraîné médian (B3) ainsi qu'un conduit (9a, 9b) disposé entre eux et reprenant un fluide hydraulique étant prévu pour la transmission des forces entre la première et la deuxième section de transmission de force, le fluide hydraulique circulant entre l'ensemble d'entraînement médian (A3) et l'ensemble entraîné médian (B3) et transmettant des forces de poussée entre l'ensemble d'entraînement médian (A3) et l'ensemble entraîné médian (B3),
le premier ensemble entraîné (B1) étant accouplé à l'ensemble d'entraînement médian (A3) et l'ensemble entraîné médian (B3) étant accouplé au deuxième ensemble d'entraînement (A2).

2. Ensemble selon la revendication 1, dans lequel le premier guide-chaîne (7a, 7b) et le deuxième guide-chaîne (8a, 8b) présentent des parties de renvoi situées à l'extérieur de l'ensemble d'entraînement concerné et de l'ensemble entraîné concerné, chacune des parties de renvoi présentant un rayon de courbure, aucun des rayons de courbure des parties de renvoi des deux guide-chaîne (7a, 7b); (8a, 8b) n'étant inférieur à une première valeur.

3. Ensemble selon l'une des revendications précédentes, dans lequel les conduits (9a, 9b) de la section médiane de transmission de force présentent des parties de renvoi de conduit situées à l'extérieur de l'ensemble d'entraînement médian (A3) et de l'ensemble entraîné médian (B3), chacune des parties de renvoi de conduit présentant un rayon de courbure et aucun des rayons de courbure des parties de renvoi de conduit n'étant inférieur à une deuxième valeur.

4. Ensemble selon la revendication 2 et la revendication 3, dans lequel la deuxième valeur est inférieure à la première valeur.

5. Ensemble selon la revendication 4, dans lequel la deuxième valeur représente moins de la moitié ou moins du quart de la première valeur.

6. Ensemble selon l'une des revendications 2 à 5, dans lequel les rayons de courbure des deux parties de renvoi des deux guide-chaîne (7a, 7b; 8a, 8b) sont supérieurs à 10 cm, en particulier supérieurs à 20 cm et notamment supérieurs à 30 cm.

7. Ensemble selon l'une des revendications 3 à 6, dans lequel les rayons de courbure des parties de renvoi de conduit sont inférieurs à 30 cm, en particulier inférieurs à 20 cm et notamment inférieurs à 10 cm.

8. Ensemble selon l'une des revendications précédentes, dans lequel la section médiane de transmission de force est disposée pour surmonter un mur ou le toit d'un bâtiment.

9. Ensemble selon l'une des revendications précédentes, dans lequel dans un mode de fonctionnement inversé, au moins l'un des ensembles d'entraînement (A1, A2, A3) peut être utilisé comme ensemble entraîné et/ou au moins l'un des ensembles entraînés (B1, B2, B3, B4) comme ensemble d'entraînement.

10. Ensemble selon l'une des revendications précédentes, dans lequel l'ensemble d'entraînement médian et/ou l'ensemble entraîné médian est réalisé sous la forme d'une pompe à aubes cellulaires.

11. Ensemble selon la revendication 10, dans lequel au moins l'une des pompes à aubes cellulaires présente une partie de transmission de force dans laquelle des éléments d'entraînement ou des éléments entraînés s'enfoncent dans un fluide pour transmettre une force vers ou depuis ce fluide hydraulique et forme une cellule fermée, cette partie de transmission de force occupant dans la direction périphérique une zone d'au moins 150 degrés et en particulier d'au moins 180 degrés.
